# EUROPEAN PATENT APPLICATION

(11) **EP 2 713 282 A2**
(43) Date of publication of application: **02.04.2014**
(21) Application number: 11777290.5
(22) Date of filing: 26.07.2011
(51) Int. Cl.: G06F 15/163, G06F 3/01

(54) **INPUT METHOD FOR COMMUNICATION TERMINALS AND COMMUNICATION TERMINALS**

(71) Applicant: Huawei Device Co., Ltd., Longgang District Shenzhen Guangdong 518129 (CN)
(72) Inventor: GAO, Xiang, Shenzhen Guangdong 518129 (CN)
(74) Representative: Maiwald Patentanwalts GmbH
(86) International application number: PCT/CN2011/077602
(87) International publication number: WO 2011/137871

(57) **Abstract**

An embodiment of the present invention discloses an input method for communications terminals, including: a communications terminal configured with a touch screen sends an input request message; a communications terminal configured with a keyboard returns an input acceptance message to the communications terminal configured with a touch screen; the communications terminal configured with a touch screen establishes a communications link with the communications terminal configured with a keyboard; the communications terminal configured with a keyboard generates input content, obtains a data packet through processing, and sends the data packet to the communications terminal configured a the touch screen through the communications link; the communications terminal configured with a touch screen processes the data packet to obtain the input content. Embodiments of the present invention also disclose corresponding communications terminals. By applying the input method and communications terminals in the present invention, and using a communications terminal configured with a keyboard to perform input for a communications terminal configured with a touch screen, the input speed and accuracy for a touch-screen mobile phone are improved, thereby solving the problem that the input experience on a touch-screen communications terminal is poor.

## Description

### TECHNICAL FIELD

The present invention relates to the field of communications technologies, and in particular, to an input method for communications terminals and communications terminals.

### BACKGROUND

A touch-screen communications terminal refers to a type of communications terminal that applies a touch screen technology to a mobile phone screen. Typical touch-screen communications terminals are touch-screen mobile phones, tablet computers, and PDA computers. Currently, features of mainstream touch-screen communications terminals include large screens and full-size touch screens. A full-size touch-screen communications terminal brings an excellent experience to users' operations, but also has apparent disadvantages: During text input, a full-size touch-screen communications terminal uses a virtual keyboard input method. Compared with a traditional keyboard input method, during language input, a touch screen is largely inferior to a mobile phone configured with a keyboard in terms of input accuracy, input speed, and input feel. Although a touch-screen communications terminal provides increasingly high performance, more and more functions, and an increasingly high processing speed, in application fields such as business mails and literature writing, where large amounts of content need to be input, an input experience of a touch-screen communications terminal is still far from users' expectations. Currently, touch-screen communications terminals with full keyboards are also available. Addition of a keyboard, however, brings a great pressure on a structure design and cost of a touch-screen communications terminal. Therefore, touch-screen communications terminals with full keyboards fail to be a mainstream in the touch-screen communications terminal market.

### SUMMARY

Embodiments of the present invention disclose an input method for communications terminals and communications terminals where an input operation of a touch-screen mobile phone is shifted to a mobile phone with a keyboard to solve the problem of a poor input experience of the touch-screen communications terminal.

An embodiment of the present invention discloses an input method for communications terminals, which is applied to a communications terminal configured with a touch screen, including:
sending, by the communications terminal configured with a touch screen, an input request message;
acquiring an input acceptance message returned by a communications terminal configured with a keyboard;
establishing a communications link with the communications terminal configured with a keyboard;
acquiring a data packet from the communications terminal configured with a keyboard through the communications link, where the data packet is generated by the communications terminal configured with a keyboard by acquiring input content using a built-in keyboard and processing the input content; and
processing the data packet to obtain the input content.

An embodiment of the present invention discloses an input method for communications terminals, which is applied to a communications terminal configured with a keyboard, including:
acquiring, by the communications terminal configured with a keyboard, an input request message of a communications terminal with a touch screen;
returning an input acceptance message to the communications terminal configured with a touch screen;
establishing a communications link with the communications terminal configured with a touch screen;
acquiring input content using a built-in keyboard, and processing the input content to generate a data packet; and
by sending the data packet to the communications terminal configured with a touch screen through the communications link, making the communications terminal configured with a touch screen acquire the data packet and process the data packet to acquire the input content.

An embodiment of the present invention discloses a communications terminal configured with a touch screen, including:
a first processor; a first input/output unit; and a first establisher, where:
   the first processor is configured to: generate an input request message; acquire an input acceptance message from a communications terminal configured with a keyboard using the first input/output unit and notify the first establisher of establishing a communications link with the communications terminal configured with a keyboard; acquire a data packet from the communications terminal configured with a keyboard using the first input/output unit; and obtain input content by processing the data packet;
   the first input/output unit is configured to: acquire the input request message from the first processor and send the input request message; and receive the input acceptance message returned from the communications terminal configured with a keyboard; and receive the data packet from the communications terminal configured with a keyboard through the communications link and send the data packet to the first processor; and
   the first establisher is configured to establish the communications link with the communications terminal configured with a keyboard using the first input/output unit.

An embodiment of the present invention discloses a communications terminal configured with a keyboard, including:
a second processor; a second input/output unit; a second establisher; and a keyboard, where:
   the second processor is configured to: acquire an input request message from a communications terminal configured with a touch screen using the second input/output unit; if accepting the input request message, generate an input acceptance message and send the input acceptance message to the communications terminal configured with a touch screen using the second input/output unit; notify the second establisher of establishing a communications link with the communications terminal configured with a touch screen; then acquire an input key value signal from the keyboard, and convert the input key value signal into input content according to a built-in input method; generate a data packet by processing the input content; and send the data packet to the communications terminal configured with a touch screen using the second input/output unit;
   the second input/output unit is configured to: receive the input request message from the communications terminal configured with a touch screen, acquire the input acceptance message from the second processor and send the input acceptance message to the communications terminal configured with a keyboard; and further acquire the data packet from the second processor and send the data packet to the communications terminal configured with a keyboard;
   the second establisher is configured to establish the communications link with the communications terminal configured with a touch screen using the second input/output unit; and
   the keyboard is configured to generate the key value signal and send the key value signal to the second processor.

By applying the input method for communications terminals and the communications terminals disclosed in this embodiment, the input operation of a touch-screen mobile phone is shifted to a mobile phone with a keyboard, and thereby a communications terminal configured with a keyboard may be used to perform input for a touch-screen communications terminal, improving the input speed and accuracy for a touch-screen mobile phone and enhancing the input experience on the touch-screen communications terminal.

### DESCRIPTION OF THE DRAWINGS

FIG. 1 is a schematic flowchart of an input method for communications terminals according to an embodiment of the present invention;
FIG. 2 is a schematic flowchart of another input method for communications terminals according to an embodiment of the present invention;
FIG. 3 is a schematic flowchart of another input method for communications terminals according to an embodiment of the present invention;
FIG. 4 is a schematic flowchart of another input method for communications terminals according to an embodiment of the present invention;
FIG. 5 is a schematic flowchart of another input method for communications terminals according to an embodiment of the present invention;
FIG. 6 is a schematic structural diagram of a communications terminal according to an embodiment of the present invention;
FIG. 7 is a schematic structural diagram of another communications terminal according to an embodiment of the present invention;
FIG. 8 is an exemplary diagram of an input process for communications terminals according to an embodiment of the present invention; and
FIG. 9 is an exemplary diagram of another input process for communications terminals according to an embodiment of the present invention.

### DESCRIPTION OF THE EMBODIMENTS

To make the purpose, technical solution, and advantages of the embodiments of the present invention more clear, the following further describes the specific embodiments of the present invention in detail with drawings. Evidently, the embodiments described below are for the exemplary purpose only, without covering all embodiments of the present invention. All other embodiments obtained by a person of ordinary skill in the art based on the embodiments of the present invention without creative efforts shall fall within the protection scope of the present invention.

First, it needs to be noted that, the communications terminal configured with a touch screen described in this embodiment includes but is not limited to a terminal device such as a touch-screen mobile phone, a tablet computer, or a PDA computer, and the communications terminal configured with a keyboard includes but is not limited to a terminal device such as a mobile phone, a laptop computer, or a desktop computer. In the following embodiments, the case where both the communications terminal configured with a touch screen and the communications terminal configured with a keyboard are mobile phones is taken as an example for description, but does not constitute restriction for the present invention.

### Method embodiment

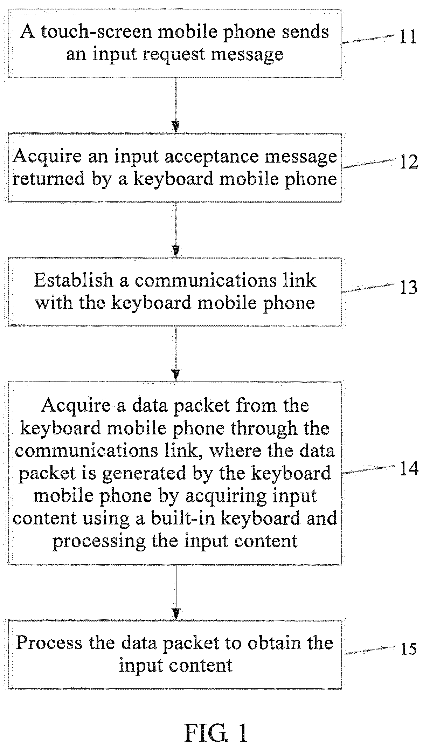

Referring to FIG. 1, embodiment 1 of the present invention provides an input method for communications terminals, which is applied to a mobile phone configured with a touch screen (hereinafter referred to as a touch-screen mobile phone), including the following steps:
Step 11: The touch-screen mobile phone sends an input request message.

Specifically, an input method, for example, "remote input method", may be set on the touch-screen mobile phone. When needing to perform input, the touch-screen mobile phone goes to the input interface, for example, editing a short message, writing a mail, or adding a memo. In this case, the input method of the touch-screen mobile phone is switched to the "remote input method". Then, the touch-screen mobile phone automatically sends an input request message within the wireless signal range in a wireless manner, for example, Bluetooth, infrared, Wi-Fi, or the like.

Alternatively, the sending an input request message within the wireless signal range may be sending in a broadcast form, or firstly searching for other communications terminals, such as a mobile phone and a laptop computer, which have wireless connection capabilities within the range in a manner such as Bluetooth, infrared, Wi-Fi, or the like, selecting a specific communications terminal, for example, a certain mobile phone configured with a keyboard (hereinafter referred to as a keyboard mobile phone) after acquiring a list of the communications terminals, and separately sending the input request message to the specific communications terminal. For example, a communications terminal named "Smart Phone" needs to use a communications terminal whose mobile phone name is "Keyboard Phone" in the wireless signal range for wireless input. Then, the Smart Phone first searches for communications terminals that have a Bluetooth capability in the range using Bluetooth to obtain a list of Bluetooth communications terminals, and then selects the Keyboard Phone from the list and sends an input request message. Then, Smart only sends the Keyboard Phone the input request message, thereby reducing signaling interaction and reducing electrical power consumption.

Step 12: Acquire an input acceptance message returned by the keyboard mobile phone.

If the keyboard mobile phone accepts the input request message sent by the touch-screen mobile phone in step 11, the keyboard mobile phone returns the input acceptance message to the touch-screen mobile phone so that the touch-screen mobile phone receives the input acceptance message.

Step 13: Establish a communications link with the keyboard mobile phone.

Establishment of the communications link may be implemented in a manner such as Wi-Fi, infrared ray, Bluetooth, or the like.

Step 14: Acquire a data packet from the keyboard mobile phone through the communications link, where the data packet is generated by the keyboard mobile phone by acquiring input content using a built-in keyboard and processing the input content.

Specifically, the keyboard mobile phone may use a built-in input method, including but not limited to a pinyin, stroke, Wubi, alphabetic, English, or numeric input method, of the keyboard mobile phone to acquire the input content. As the speed and accuracy where a keyboard mobile phone uses a built-in input method to acquire input content using the keyboard are relatively high, a good input experience is ensured. The keyboard mobile phone then processes the input content to generate a data packet. The processing includes performing encapsulation processing for the input content. Then, the touch-screen mobile phone uses the communications link that uses Key2 for encryption and is established in step 13 to acquire the data packet.

Step 15: Process the data packet to obtain the input content.

The touch-screen mobile phone performs decapsulation processing for the data packet acquired in step 14 to obtain the input content entered on the keyboard mobile phone to complete the process of performing input for the touch-screen mobile phone using the keyboard mobile phone.

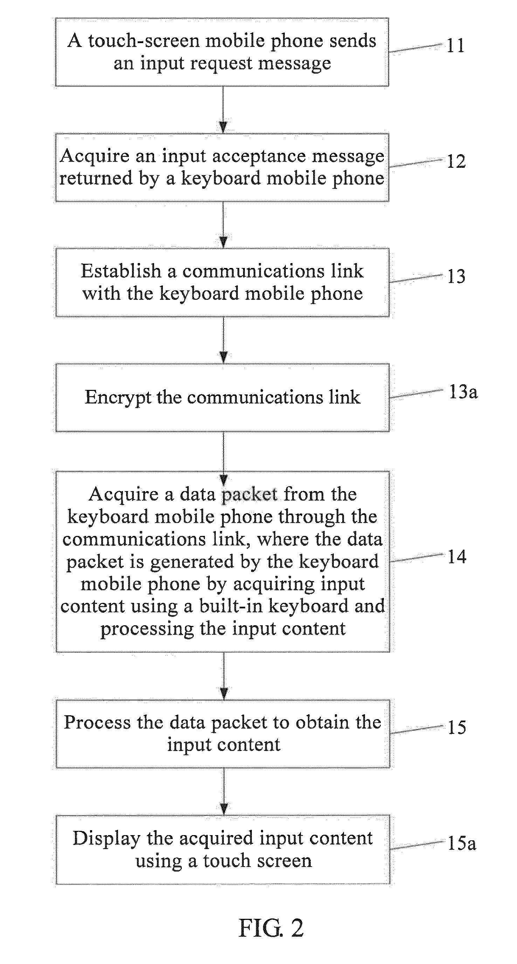

Alternatively, referring to FIG. 2, after the touch-screen mobile phone establishes the communications link with the keyboard mobile phone in step 13, the following is further included:
Step 13a: Encrypt the communications link.

Specifically, the touch-screen mobile phone generates an initial key, for example Key1, at random, and sends Key1 in a manner such as Bluetooth, infrared, Wi-Fi, or the like to the keyboard mobile phone. After receiving Key1, the keyboard mobile phone may generate a matching key Key2 at random, use the received Key1 to encrypt Key2, and send the encrypted Key2 to the touch-screen mobile phone. After acquiring the encrypted Key2, the touch-screen mobile phone uses the initial key Key1 for decryption to obtain the matching key Key2. By far, a communications link that is encrypted using the matching key Key2 is established between the touch-screen mobile phone and the keyboard mobile phone. The aforesaid signaling interaction may be implemented in a manner such as Wi-Fi, infrared ray, Bluetooth, or the like.

Alternatively, referring to FIG. 2, after the touch-screen mobile phone acquires the input content entered on the keyboard mobile phone in step 15, the following is further included:
Step 15a: The touch-screen mobile phone displays the acquired input content using a touch screen.

Further, when the input content entered on the keyboard mobile phone is changed, two processing methods are available for the touch-screen mobile phone to display the entered input content on the touch screen:
a. The touch-screen mobile phone acquires and displays the input content in real time, that is, the touch-screen mobile phone may acquire the changed data packet from the keyboard mobile phone side in real time, and after processing the changed data packet, displays the changed input content in real time using the touch screen on the touch-screen mobile phone side, thereby ensuring fast and convenient input;
b. The touch-screen mobile phone does not acquire and display the input content in real time, that is, the touch-screen mobile phone may acquire the changed data packet after the keyboard mobile phone confirms the entered input content, and after processing the changed data packet, displays the changed input content using the touch screen on the touch-screen mobile phone side, thereby ensuring accurate input.

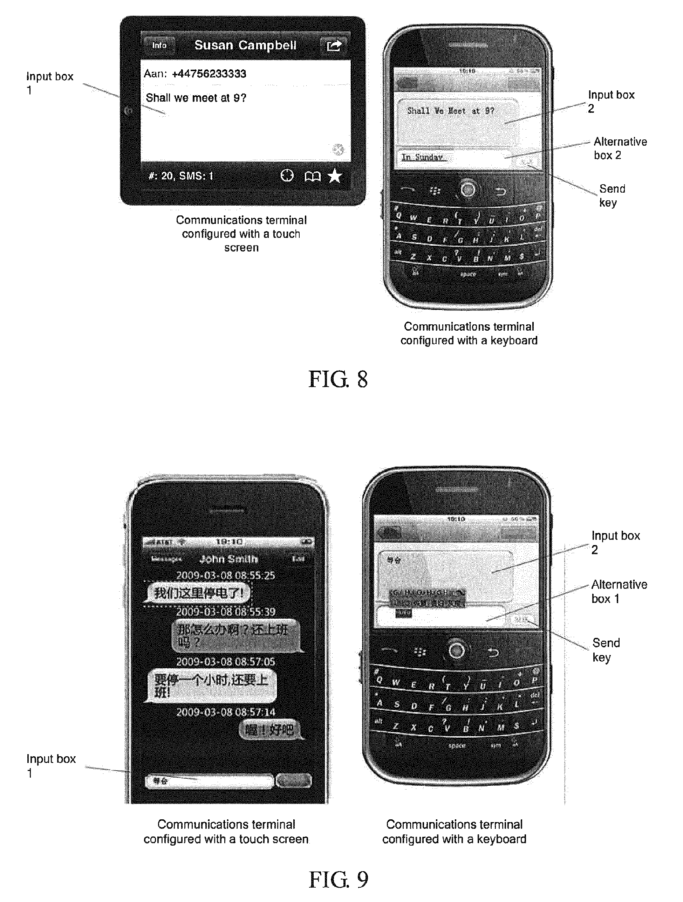

To make step 14 and step 15 of this embodiment more clear and detailed, the following describes this technical solution using examples. Referring to FIG. 8, FIG. 8 takes input of a short message in English as an example. The left side is an input interface of a touch-screen mobile phone, and the right side is an input interface of a keyboard mobile phone. As shown in FIG. 8, input content "Shall we meet at 9?" has been entered in an input box 2 of the keyboard mobile phone. At this time, in an input box 1 of the touch-screen mobile phone, the same input content "Shall we meet at 9?" is displayed as in the input box 2 of the keyboard mobile phone. At this time, there is also content "In Sunday" in an alternative box 2 of the keyboard mobile phone. It needs to be noted that the content in the alternative box 2 of the keyboard mobile phone may not be sent and displayed in the input box 1 of the touch-screen mobile phone. If the touch-screen mobile phone displays the input content entered on the keyboard mobile phone in real time, after the keyboard mobile phone transfers the input content "In Sunday" to the input box 2, the keyboard mobile phone automatically performs encapsulation processing for updated input content "Shall we meet at 9? In Sunday" in the input box 2 to generate an updated data packet, and sends the updated data packet to the touch-screen mobile phone in real time through the communications link. The touch-screen mobile phone immediately performs decapsulation processing for the updated data packet to acquire the updated input content, and displays the input content "Shall we meet at 9? In Sunday" on the touch screen, thereby ensuring fast input. If the touch-screen mobile phone does not display the input content entered on the keyboard mobile phone in real time, after the keyboard mobile phone transfers the input content "In Sunday" to the input box 2, the keyboard mobile phone needs to, perform encapsulation processing, only after a user confirms the newly entered input content and selects a "send" key on the right side of the alternative box 2 (the "send" key is specifically set for this input method and is configured to confirm sending of updated input content), for the updated input content "Shall we meet at 9? In Sunday" in the input box 2 to generate an updated data packet, and sends the updated data packet to the touch-screen mobile phone through the communications link. The touch-screen mobile phone then performs decapsulation processing for the updated data packet to acquire the updated input content, and displays the input content "Shall we meet at 9? In Sunday" on the touch screen, thereby ensuring accurate input.

Referring to FIG. 9, FIG. 9 takes input of a short message in Chinese pinyin as an example. The left side is an input interface of a touch-screen mobile phone, and the right side is an input interface of a keyboard mobile phone. As shown in FIG. 9, input content "In a second" has been entered in an input box 2 of the keyboard mobile phone. At this time, in an input box 1 of the touch-screen mobile phone, the same input content "In a second" is displayed as in the input box 2 of the keyboard mobile phone. There is also pinyin alternative content "huifu" in the alternative box 2 of the keyboard mobile phone. It needs to be noted that the pinyin alternative content in the alternative box 2 of the keyboard mobile phone may not be sent and displayed in the input box 1 of the touch-screen mobile phone. The following takes the case where the user wants to enter "reply" in Chinese as an example. If the touch-screen mobile phone displays the input content entered on the keyboard mobile phone in real time, after the keyboard mobile phone transfers the input content "reply" in Chinese to the input box 2, the keyboard mobile phone automatically performs encapsulation processing for updated input content "Reply in a second" in the input box 2 to generate an updated data packet, and sends the updated data packet to the touch-screen mobile phone in real time through a communications link. The touch-screen mobile phone immediately performs decapsulation processing for the updated data packet to acquire the updated input content, and displays the input content "Reply in a second" on the touch screen in real time, thereby ensuring fast input. If the touch-screen mobile phone does not display the input content entered on the keyboard mobile phone in real time, after the keyboard mobile phone transfers the input content "reply" to the input box 2, the keyboard mobile phone needs to, perform encapsulation processing, only after a user confirms the newly entered input content and selects a "send" key on the right side of the alternative box 2 (the "send" key is specifically set for this input method and is configured to confirm sending of updated input content), for the updated input content "Reply in a second" in the input box 2 to generate an updated data packet, and sends the updated data packet to the touch-screen mobile phone through the communications link. The touch-screen mobile phone then performs decapsulation processing for the updated data packet to acquire the updated input content, and displays the input content "Reply in a second" on the touch screen, thereby ensuring accurate input.

In this embodiment, the touch-screen mobile phone sends an input request message, and then acquires an input acceptance message returned by the keyboard mobile phone. The touch-screen mobile phone establishes a communications link with the keyboard mobile phone, and then performs encapsulation processing for a data packet acquired from the keyboard mobile phone through the communications link and obtains the input content on the keyboard mobile phone. Then, the touch-screen mobile phone displays the input content on the touch screen. The touch-screen mobile phone may acquire and display the input content entered on the keyboard mobile phone in real time, or acquire and display the input content entered on the keyboard mobile phone after a user makes confirmation. With application of this embodiment, an input operation of a touch-screen mobile phone is shifted to a mobile phone with a keyboard, the input speed and accuracy of the touch-screen mobile phone are improved, and the input experience on the touch-screen mobile phone is enhanced.

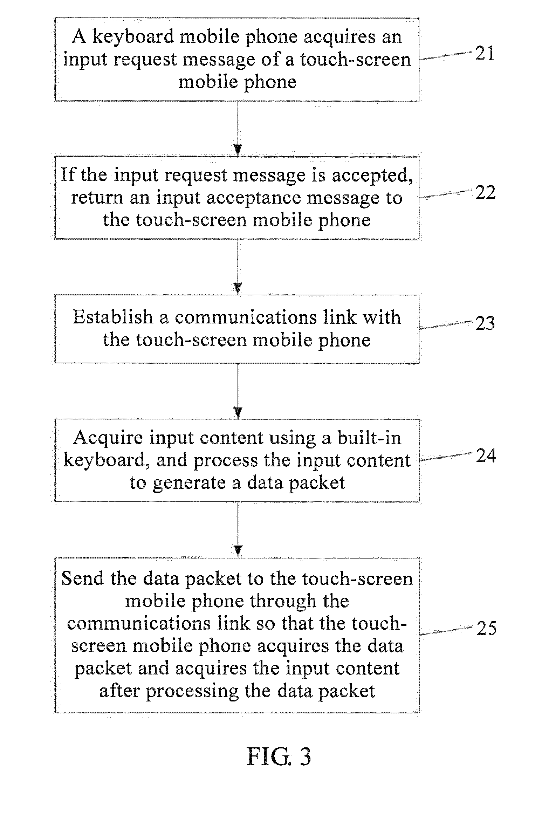

Referring to FIG. 3, embodiment 2 of the present invention provides an input method for communications terminals, which is applied to a communications terminal configured with a keyboard, including:
Step 21: A keyboard mobile phone acquires an input request message of a touch-screen mobile phone.
Step 22: If the input request message is accepted, return an input acceptance message to the touch-screen mobile phone.

If the input request message is not accepted, alternatively, the input request message may be directly ignored, or an input rejection message may be returned to the touch-screen mobile phone.

Step 23: Establish a communications link with the touch-screen mobile phone.

Establishment of the communications link may be implemented in a manner such as Wi-Fi, infrared ray, Bluetooth, or the like.

Step 24: The keyboard mobile phone acquires input content using a built-in keyboard, and processes the input content to generate a data packet.

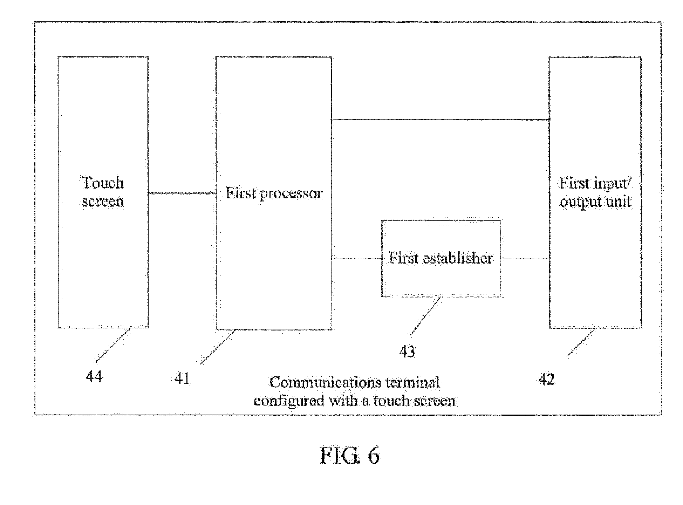

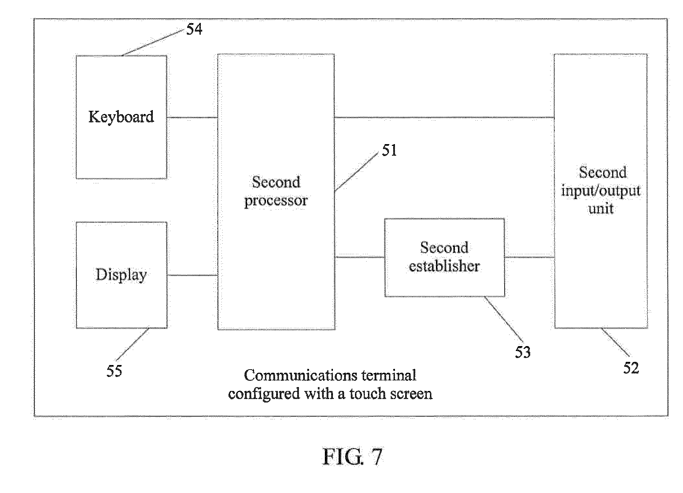

Specifically, after the communications link described in step 23 is established, the keyboard mobile phone opens an input interface to start the input process. Reference may be made to input interfaces of keyboard mobile phones in FIG. 6 and FIG. 7. The input interface may be an interface the same as that of the touch-screen mobile phone, for example, editing a short message or writing a mail, or may also be a dedicated input interface used for a "remote input method". The embodiments of the present invention preferably use a dedicated input interface. Entering input content on a keyboard mobile phone may use a built-in input method of the keyboard mobile phone, including but not limited to a pinyin, stroke, Wubi, alphabetic, English, or numeric input method. As the speed and accuracy for a keyboard mobile phone to perform input using a built-in keyboard and a built-in input method are relatively high, a relatively good input experience is ensured. The keyboard mobile phone then processes the input content to generate a data packet. The processing includes performing encapsulation processing for the input content.

Step 25: Send the data packet to the touch-screen mobile phone through the communications link, so that the touch-screen mobile phone acquires the data packet and obtains the input content after processing the data packet.

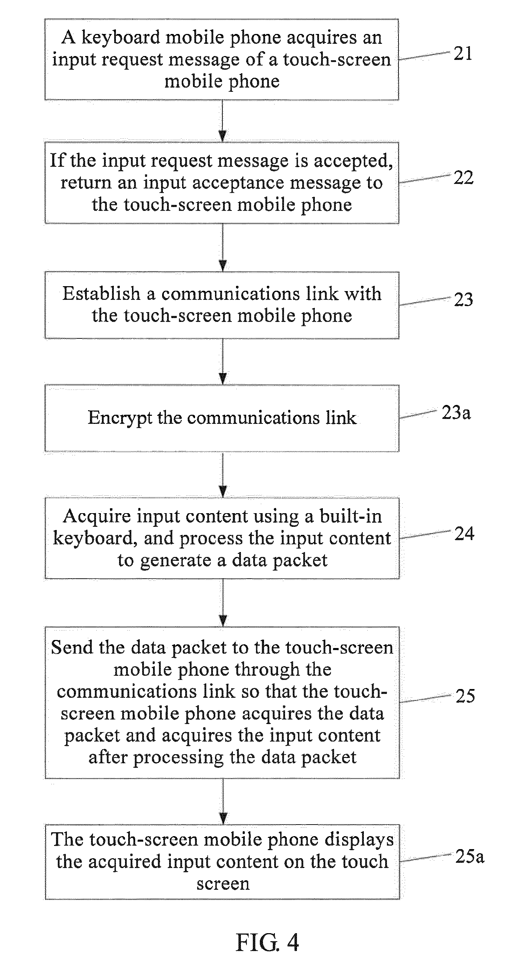

Alternatively, referring to FIG. 4, after the keyboard mobile phone establishes the communications link with the touch-screen mobile phone in step 23, the following is further included:
Step 23a: Encrypt the communications link.

Specifically, the touch-screen mobile phone generates an initial key, for example Key1, at random, and sends Key1 in a manner such as Bluetooth, infrared, Wi-Fi, or the like to the keyboard mobile phone. After receiving Key1, the keyboard mobile phone generates a matching key Key2 at random, use the received Key1 to encrypt Key2, and send the encrypted Key2 to the touch-screen mobile phone. After acquiring the encrypted Key2, the touch-screen mobile phone uses the initial key Key1 for decryption to obtain the matching key Key2. By far, a communications link that is encrypted using the matching key Key2 is established between the keyboard mobile phone and the touch-screen mobile phone. The aforesaid signaling interaction may be implemented in a manner such as Wi-Fi, infrared ray, Bluetooth, or the like.

Alternatively, referring to FIG. 4, after the touch-screen mobile phone obtains the input content by performing decapsulation processing for the data packet in step 25, the following is further included:
Step 25a: Display the acquired input content on the touch screen.

Further, when the input content entered on the keyboard mobile phone is changed, two processing methods are available for the keyboard mobile phone to process and send the changed input content:
a. The keyboard mobile phone processes and sends the changed input content in real time, that is, the keyboard mobile phone performs encapsulation processing for the changed input content in real time and generates an updated data packet, sends the updated data packet to the touch-screen mobile phone for the touch-screen mobile phone to acquire in real time, thereby ensuring fast and convenient input;
b. The keyboard mobile phone does not process and send the changed input content in real time, that is, the keyboard mobile phone performs encapsulation processing, after the user confirms the changed input content, for the input content and generates an updated data packet, sends the updated data packet to the touch-screen mobile phone for the touch-screen mobile phone to acquire, thereby ensuring accurate input.

As an example, for more clear and detailed description for step 24 and step 25 of this embodiment, reference may be made to previous description for FIG. 8 and FIG. 9.

In this embodiment, the keyboard mobile phone acquires an input request message from the touch-screen mobile phone, and then returns an input acceptance message to the keyboard mobile phone. After the touch-screen mobile phone accepts the input acceptance message, the keyboard mobile phone establishes a communications link with the touch-screen mobile phone, then acquires input content using a built-in keyboard and a built-in input method, performs encapsulation processing for the input content to generate a data packet, and sends the data packet to the touch-screen mobile phone through the communications link so that the touch-screen mobile phone displays the input content on its touch screen after receiving the data packet and performing decapsulation processing for the data packet. The keyboard mobile phone may send the input content entered on the keyboard mobile phone in real time, or send the input content entered on the keyboard mobile phone after a user makes confirmation. With application of this embodiment, an input operation of a touch-screen mobile phone is shifted to a keyboard mobile phone, the input speed and accuracy of the touch-screen mobile phone are improved, and the input experience on the touch-screen mobile phone is enhanced.

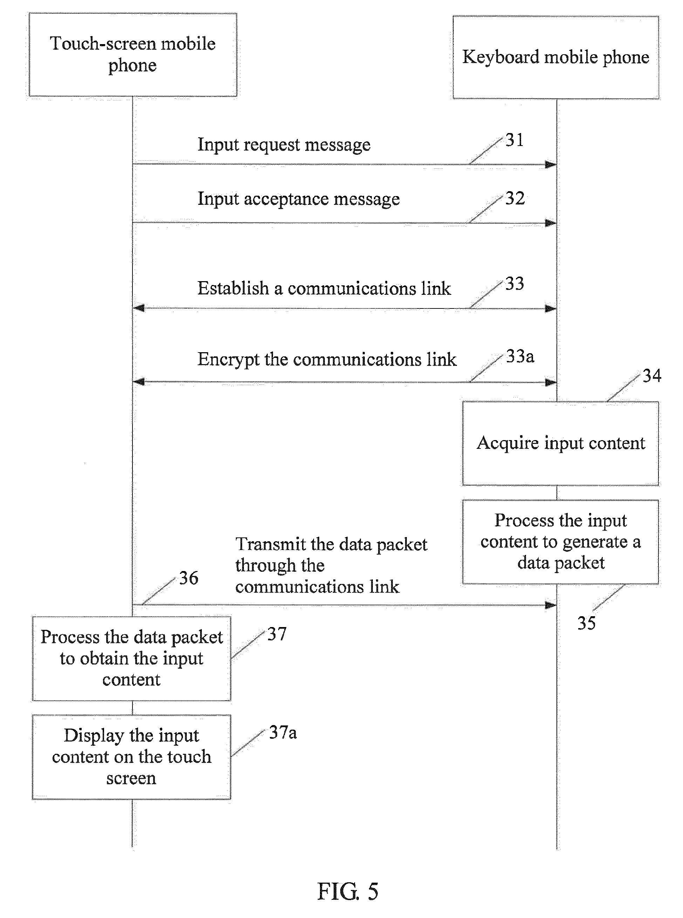

FIG. 5 is a schematic flowchart of an input method for communications terminals according to embodiment 3 of the present invention. Referring to FIG. 3, the input method for communications terminals in this embodiment may include the following steps:
Step 31: A touch-screen mobile phone sends an input request message to a keyboard mobile phone.
Step 32: The keyboard mobile phone returns an input acceptance message to the touch-screen mobile phone.
Step 33: The touch-screen mobile phone establishes a communications link with the keyboard mobile phone.
Step 34: The keyboard mobile phone acquires input content using a built-in keyboard.
Step 35: The keyboard mobile phone processes the input content to generate a data packet.
Step 36: The keyboard mobile phone sends the data packet to the touch-screen mobile phone through the communications link.
Step 37: The touch-screen mobile phone processes the data packet to acquire the input content.

Alternatively, after the touch-screen mobile phone establishes the communications link with the keyboard mobile phone in step 33, the following may further be included:
Step 33a: Encrypt the communications link.

Alternatively, after the touch-screen mobile phone acquires the input content in step 37, the following may further be included:
Step 37a: The touch-screen mobile phone displays the acquired input content on a touch screen.

The specific process is already described in detail in the preceding two embodiments, and is not described herein again.

In this embodiment, the touch-screen mobile phone sends an input request message to the keyboard mobile phone, the keyboard mobile phone returns an input acceptance message to the touch-screen mobile phone, and then the touch-screen mobile phone establishes a communications link with the keyboard mobile phone. The keyboard mobile phone, after obtaining input content using a built-in keyboard, processes the input content to generate a data packet. The keyboard mobile phone sends the data packet to the touch-screen mobile phone through the communications link. The touch-screen mobile phone then processes the data packet to acquire the input content, and displays the input content in an input box. With application of this embodiment, an input operation of a touch-screen mobile phone is shifted to a mobile phone with a keyboard, the input speed and accuracy of the touch-screen mobile phone are improved, and the input experience on the touch-screen mobile phone is enhanced.

### Apparatus embodiment

Referring to FIG. 6, embodiment 4 of the present invention provides a communications terminal configured with a touch screen. Taking a touch-screen mobile phone as an example, the following structure may be included:
a first processor 41; a first input/output unit 42; and a first establisher 43.

The first processor 41 is configured to: generate an input request message; acquire an input acceptance message from a keyboard mobile phone using the first input/output unit 42 and notify the first establisher 43 of establishing a communications link with the keyboard mobile phone; acquire a data packet from the keyboard mobile phone using the first input/output unit 42; and obtain input content by processing the data packet.

The data packet is generated by the keyboard mobile phone by obtaining the input content using a built-in keyboard and input method and performing encapsulation processing for the input content. Processing, by the first processor 41, for the data packet acquired using the first input/output unit 42 includes decapsulation processing, so as to obtain the input content on the keyboard mobile phone and complete the process of performing input for the touch-screen mobile phone using the keyboard mobile phone.

The first input/output unit 42 is configured to: acquire the input request message from the first processor 41 and send the input request message; and receive the input acceptance message returned from the keyboard mobile phone; and further receive the data packet from the keyboard mobile phone through the communications link and send the data packet to the first processor.

Sending, by the first input/output unit 42, the input request message, receiving the input acceptance message, and receiving the data packet from the keyboard mobile phone may be performed in a manner such as Bluetooth, infrared, Wi-Fi, or the like.

The first establisher 43 is configured to establish the communications link with the keyboard mobile phone using the first input/output unit 42.

Alternatively, the first establisher 43 may further be configured to encrypt, together with the keyboard mobile phone, the communications link that is already established: the first establisher 43 generates an initial key, for example Key1, at random, and sends Key1 using the first input/output unit 42 to the keyboard mobile phone. After receiving Key1, the keyboard mobile phone may generate a matching key Key2 at random, use the received Key1 to encrypt Key2, and send the encrypted Key2 to the first establisher 42. After acquiring the encrypted Key2, the first establisher 42 uses the initial key Key1 for decryption to obtain the matching key Key2. By far, a communications link that is encrypted using the matching key Key2 is established between the touch-screen mobile phone and the keyboard mobile phone. The aforesaid signaling interaction may be implemented in a manner such as Wi-Fi, infrared ray, Bluetooth, or the like.

Further, referring to FIG. 6, the touch-screen mobile phone further includes:
a touch screen 44, configured to acquire the input content from the first processor 41 and display the input content.

It needs to be noted that, the first processor 41 and the first establisher 43 in the embodiments of the present invention may be implemented using separate hardware modules, or may also be an integrated microprocessor, or may further be functional modules integrated in a main chip.

In this embodiment, the first processor 41 generates an input request message, and sends the input request message to the keyboard mobile phone using the first input/output unit 42; the first input/output unit 42 receives an input acceptance message from the keyboard mobile phone and sends the input acceptance message to the first processor 41; the first processor 41 notifies the first establisher 43 of establishing a communications link with the keyboard mobile phone and performs encryption; then the first input/output unit 42 acquires a data packet from the keyboard mobile phone through the communications link; the first processor 41 performs processing for the data packet and obtains input content; the touch screen 44 acquires the input content from the first processor 41 and displays the input content. With application of this embodiment, an input operation of a touch-screen mobile phone is shifted to a keyboard mobile phone, the input speed and accuracy of the touch-screen mobile phone are improved, and the input experience on the touch-screen mobile phone is enhanced.

Referring to FIG. 7, embodiment 5 of the present invention provides a communications terminal configured with a keyboard. Taking a keyboard mobile phone as an example, the following structure may be included:
a second processor 51; a second input/output unit 52; a second establisher 53; and a keyboard 54.

The second processor 51 is configured to: acquire an input request message from a touch-screen mobile phone using the second input/output unit 52; if accepting the input request message, generate an input acceptance message and send the input acceptance message to the touch-screen mobile phone using the second input/output unit 52; notify the second establisher 53 to establish a communications link with the touch-screen mobile phone; then acquire an input key value signal from the keyboard 54, and convert the input key value signal into input content according to a built-in input method; generate a data packet by processing the input content; and send the data packet to the touch-screen mobile phone using the second input/output unit 52.

The built-in input method includes but is not limited to a pinyin, stroke, Wubi, alphabetic, English, or numeric input method. The processing the input content includes performing encapsulation processing for the input content to generate a data packet.

Alternatively, if the second processor 51 does not accept the input request message, the input request message may be directly ignored, or an input rejection message may be returned to the touch-screen mobile phone using the second input/output unit 52.

The second input/output unit 52 is configured to acquire the input request message of the touch-screen mobile phone and send the input request message to the second processor 51, acquire the input acceptance message from the second processor 51 and send the input acceptance message to the touch-screen mobile phone, and acquires the data packet from the second processor 51 and send the data packet to the touch-screen mobile phone through the communications link.

Performing the preceding data transmission by the input/output unit 52 may be performed in a manner such as Bluetooth, infrared, Wi-Fi, or the like.

The second establisher 53 is configured to establish the communications link with the touch-screen mobile phone using the second input/output unit 52.

Alternatively, the second establisher 53 may further be configured to encrypt, together with the touch-screen mobile phone, the communications link that is already established: the touch-screen mobile phone generates an initial key, for example Key1, at random; the second establisher acquires Key1 in a manner such as Bluetooth, infrared, Wi-Fi, or the like; then the second establisher 53 generates a matching key Key2 at random, uses the received Key1 to encrypt Key2, and sends the encrypted Key2 to the touch-screen mobile phone; after acquiring the encrypted Key2, the touch-screen mobile phone uses the initial key Key1 for decryption to obtain the matching key Key2. By far, a communications link that is established between the keyboard mobile phone and the touch-screen mobile phone is encrypted using the matching key Key2. The aforesaid signaling interaction may be performed in a manner such as Wi-Fi, infrared ray, Bluetooth, or the like.

The keyboard 54 is configured to generate the key value signal and send the key value signal to the second processor 51.

As the speed and accuracy for entering content using a keyboard on a keyboard mobile phone are relatively high, a relatively good input experience is ensured.

Alternatively, referring to FIG. 7, the communications terminal configured with a keyboard may further include:
a display 55, configured to acquire the input content from the second processor 51 and display the input content.

It needs to be noted that, the second processor 51 and the second establisher 43 in the embodiments may be implemented using separate hardware modules, or may also be an integrated microprocessor, or may further be functional modules integrated in a main chip.

In this embodiment, the second processor 51 receives an input request message from the touch-screen mobile phone using the second input/output unit 52, generates an input acceptance message and returns the input acceptance message to the touch-screen mobile phone using the second input/output unit 52, and then notifies the second establisher 53 of establishing a communications link with the touch-screen mobile phone using the second input/output unit 52 and performs encryption; then the second processor 51 acquires an input key value signal from the keyboard 54, converts the input key value signal into input content using a built-in input method, and generates a data packet by processing the input content; the second input/output unit acquires the data packet and sends the data packet to the touch-screen mobile phone through the communications link; the display 55 acquires the input content from the second processor 51 and displays the input content. With application of this embodiment, an input operation of a touch-screen mobile phone is shifted to a keyboard mobile phone, the input speed and accuracy of the touch-screen mobile phone are improved, and the input experience on the touch-screen mobile phone is enhanced.

Those skilled in the art are able to understand that: the modules or entities of the terminals in the embodiment may be distributed in the terminal in the embodiment according to the description of the embodiment, or be changed and located in one or multiple devices different from the device in the present embodiment. The modules or entities in the preceding embodiment may be combined into one module or entity, or further split into multiple sub modules or entities.

In the preceding embodiments, the description of each embodiment has its focus. For those parts that are not described in a certain embodiment, reference may be made to the relevant descriptions in other embodiments.

Those skilled in the art are able to understand that the drawings are those for an exemplary embodiment. The modules or flows in the drawings are not necessarily required for implementing the present invention.

Through descriptions about the method in the preceding embodiments, those skilled in the art are able to clearly understand that the present invention can be implemented through software by combining a necessary general hardware platform, or through hardware. In most cases, however, the former is a preferred implementation manner. Based on such an understanding, the technical solutions in the present invention may be essentially or the part that contributes to the prior art may be embodied in the form of a software product. This computer software product is stored in a readable storage medium, such as a floppy disk, hard disk and compact disc of a computer, and includes several instructions that are configured for a computer device (which may be a personal computer, server, or network device) to execute all or certain steps of the method provided in each of the preceding embodiments of the present invention.

The preceding embodiments are intended to describe the technical solutions of the present invention but not to confine the invention. It is understandable to those skilled in the art that modifications or equivalent replacements may be made on the technical solutions provided in embodiments of the present invention without departing from the spirit and scope of the technical solutions provided in the present invention.

## Claims

1. An input method for communications terminals, applied to a communications terminal configured with a touch screen, comprising:
sending, by the communications terminal configured with a touch screen, an input request message;
acquiring an input acceptance message returned by a communications terminal configured with a keyboard;
establishing a communications link with the communications terminal configured with a keyboard;
acquiring a data packet from the communications terminal configured with a keyboard through the communications link, wherein the data packet is generated by the communications terminal configured with a keyboard by processing input content acquired using a built-in keyboard; and
processing the data packet to obtain the input content.

2. The method according to claim 2, wherein after obtaining the input content, further comprising: displaying, by the communications terminal configured with a touch screen, the input content.

3. The method according to claim 1 or 2, wherein when input content entered on the communications terminal configured with a keyboard is changed, the communications terminal configured with a touch screen acquires a changed data packet, and acquires the changed input content in real time after processing the changed data packet.

4. The method according to claim 1 or 2, wherein when input content entered on the communications terminal configured with a keyboard is changed, the communications terminal configured with a touch screen acquires, after the communications terminal side configured with a keyboard confirms the changed input content, the changed data packet, and acquires the changed input content after processing the changed data packet.

5. The method according to any one of claims 1 to 4, wherein the input content comprises input content entered using a built-in input method of the communications terminal configured a the keyboard.

6. The method according to any one of claims 1 to 5, wherein processing the input content by the communications terminal configured with a keyboard includes performing encapsulation for the input content, and processing the input content by the communications terminal configured with a touch screen includes performing decapsulation for the input content.

7. The method according to any one of claims 1 to 6, wherein the establishing the communications link with the communications terminal configured with a keyboard comprises: establishing the communications link with the communications terminal configured with a keyboard in a manner such as Wi-Fi, infrared ray, or Bluetooth.

8. The method according to any one of claims 1 to 7, wherein the establishing the communications link with the communications terminal configured with a keyboard comprises: encrypting the communications link,
the encrypting the communications link comprises:
generating, by the communications terminal configured with a touch screen, an initial key at random, and sending the initial key to the communications terminal configured with a keyboard;
acquiring an encrypted matching key, wherein the encrypted matching key is generated by the communications terminal configured with a keyboard at random and is encrypted using the initial key; and
using the initial key to decrypt the encrypted matching key, and obtaining, by the communications terminal configured with a touch screen, a matching key to complete encryption of the communications link.

9. The method according to any one of claims 1 to 8, wherein the sending, by the communications terminal configured with a touch screen, the input request message comprises: switching, by the communications terminal configured with a touch screen, when it is required to perform input, the input method to a remote input method to automatically send the input request message.

10. The method according to any one of claims 1 to 9, wherein the communications terminal configured with a touch screen comprises a smart mobile phone.

11. An input method for communications terminals, applied to a communications terminal configured with a keyboard, comprising:
acquiring, by the communications terminal configured with a keyboard, an input request message of a communications terminal with a touch screen;
returning an input acceptance message to the communications terminal configured with a touch screen;
establishing a communications link with the communications terminal configured with a touch screen;
acquiring input content using a built-in keyboard, and processing the input content to generate a data packet; and
by sending the data packet to the communications terminal configured with a touch screen through the communications link, making the communications terminal configured with a touch screen acquire the data packet and process the data packet to acquire the input content.

12. The method according to claim 11, wherein when the input content is changed, the communications terminal configured with a keyboard processes the changed input content to generate a changed data packet, and sends the changed data packet to the communications terminal configured with a touch screen in real time.

13. The method according to claim 11, wherein when the input content is changed, after confirming the changed input content, the communications terminal side configured with a keyboard processes the changed input content to generate a changed data packet, and sends the changed data packet to the communications terminal configured with a touch screen.

14. The method according to any one of claims 11 to 13, wherein the input content comprises input content entered using a built-in input method of the communications terminal configured with a keyboard.

15. The method according to any one of claims 11 to 14, wherein processing the input content by the communications terminal configured with a keyboard includes performing encapsulation for the input content, and processing the data packet by the communications terminal configured with a touch screen includes performing decapsulation for the data packet.

16. The method according to any one of claims 11 to 15, wherein the establishing the communications link with the communications terminal configured with a touch screen comprises: establishing the communications link with the communications terminal configured with a touch screen in a manner such as Wi-Fi, infrared ray, or Bluetooth.

17. The method according to any one of claims 11 to 16, wherein the establishing the communications link with the communications terminal configured with a touch screen comprises: encrypting the communications link,
the encrypting the communications link comprises:
acquiring, by the communications terminal configured with a keyboard, an initial key, wherein the initial key is generated at random by the communications terminal configured with a touch screen;
generating a matching key at random, and using the initial key to encrypt the matching key; and
returning the encrypted matching key to the communications terminal configured with a touch screen so that the communications terminal configured with a touch screen uses the initial key to decrypt the encrypted matching key to complete establishment of the communications link that is encrypted using the matching key.

18. The method according to any one of claims 11 to 17, wherein after the acquiring the input request message of the communications terminal configured with a touch screen, if the input request message is rejected, the input request message is ignored, or an input rejection message is sent to the communications terminal configured with a touch screen.

19. The method according to any one of claims 11 to 18, wherein the communications terminal configured with a keyword comprises a mobile phone.

20. A communications terminal, configured with a touch screen, comprising:
a first processor; a first input/output unit; and a first establisher, wherein:
the first processor is configured to: generate an input request message; acquire an input acceptance message from a communications terminal configured with a keyboard using the first input/output unit and notify the first establisher of establishing a communications link with the communications terminal configured with a keyboard; acquire a data packet from the communications terminal configured with a keyboard using the first input/output unit; and obtain input content by processing the data packet;
the first input/output unit is configured to: acquire the input request message from the first processor and send the input request message; and receive the input acceptance message returned from the communications terminal configured with a keyboard; and receive the data packet from the communications terminal configured with a keyboard through the communications link and send the data packet to the first processor; and
the first establisher is configured to establish the communications link with the communications terminal configured with a keyboard using the first input/output unit.

21. The communications terminal according to claim 20, further comprising:
a touch screen, configured to acquire the input content from the first processor and display the input content.

22. The communications terminal according to claim 20 or 21, wherein processing the data packet by the first processor includes performing decapsulation processing for the data packet.

23. The communications terminal according to any one of claims 20 to 22, wherein the first establisher is further configured to: encrypt, together with the communications terminal configured with a keyboard, the communications link using the first input/output unit.

24. A communications terminal configured with a keyboard, comprising:
a second processor; a second input/output unit; a second establisher; and a keyboard, wherein:
the second processor is configured to: acquire an input request message from a communications terminal configured with a touch screen using the second input/output unit; if accepting the input request message, generate an input acceptance message and send the input acceptance message to the communications terminal configured with a touch screen using the second input/output unit; notify the second establisher of establishing a communications link with the communications terminal configured with a touch screen; then acquire an input key value signal from the keyboard, and convert the input key value signal into input content according to a built-in input method; generate a data packet by processing the input content; and send the data packet to the communications terminal configured with a touch screen using the second input/output unit;
the second input/output unit is configured to: receive the input request message from the communications terminal configured with a touch screen, and send the input request message to the second processor; acquire the input acceptance message from the second processor and send the input acceptance message to the communications terminal configured with a keyboard; and further acquire the data packet from the second processor and send the data packet to the communications terminal configured with a keyboard;
the second establisher is configured to establish the communications link with the communications terminal configured with a touch screen using the second input/output unit; and
the keyboard is configured to generate the key value signal and send the key value signal to the second processor.

25. The communications terminal according to claim 24, further comprising:
a display, configured to acquire the input content from the second processor and display the input content.

26. The communications terminal according to claim 24 or 25, wherein if, after acquiring the input request message, the second processor rejects the input request message, the second processor ignores the input request message or sends an input rejection message to the communications terminal configured with a touch screen.

27. The communications terminal according to any one of claims 24 to 26, wherein processing the input content by the second processor includes perform encapsulation processing for the input content.

28. The communications terminal according to any one of claims 24 to 27, wherein the second establisher is further configured to: encrypt, together with the communications terminal configured with a touch screen, the communications link using the second input/output unit.
